# EUROPEAN PATENT APPLICATION

(11) **EP 3 916 952 A1**
(43) Date of publication of application: **01.12.2021**
(21) Application number: 20176327.3
(22) Date of filing: 25.05.2020
(51) Int. Cl.: H02J 7/34, E06B 5/00, E06B 9/00, H02J 7/35, H02J 3/38

(54) **BUILDING APERTURE COVER SYSTEM COMPRISING SWITCHING ARRANGEMENT**

(71) Applicant: VKR Holding A/S, 2970 Hørsholm (DK)
(72) Inventor: THOMSENS, Jan, 2970 Hørsholm (DK); MORTENSEN, Martin Armand, 2970 Hørsholm (DK)
(74) Representative: Zacco Denmark A/S

(57) **Abstract**

The present disclosure relates to a building aperture cover system (1). The building aperture cover system (1) comprises:
a first building aperture cover (10) and a first electrically driven drive unit (11) configured to adjust a covering part (10a) of the first building aperture cover (10), a first rechargeable battery unit (12) configured to store electric power and supply electric power to the first electrically driven drive unit (11),
a photovoltaic power supply panel (9), and
a switching arrangement (2) connected to the photovoltaic power supply panel (9) at an input connection (3) so as to receive electric energy from the photovoltaic power supply panel (9). The switching arrangement (2) comprises a switching circuitry (5) configured to switch between a first switch state (S1) and a second switch state (S2), and a switching controller (6) configured to control the switching circuitry (5).

The switching arrangement (2) is configured to supply electric energy from the photovoltaic power supply panel (9) at a first connection (7a) to recharge the first rechargeable battery unit (12) when the switching circuitry (5) is in the first switch state (S1). The building aperture cover system may moreover comprise
- a second building aperture cover (20),
- a second electrically driven drive unit (21) configured to adjust a covering part (20a) of the second building aperture cover, and
- a second rechargeable battery unit (22) configured to store electric power and supply electric power to the second electrically driven drive unit (21).

The second rechargeable battery unit (22) is configured to receive electric energy from the switching arrangement (2) from a second connection (7b) to recharge the second rechargeable battery unit (22) when the switching arrangement (2) is in the second switch state (S2), and the switching controller (6) is configured to switch between the first switch state (S1) and the second switch state (S2) based on at least one predefined criteria. The disclosure additionally relates to a method of installing a power supply system (1).

## Description

The present disclosure relates to a building aperture cover system and a method of installing a power supply system.

### Background

Various systems for retrofitting / subsequent installation of a building aperture cover such as a shutter, e.g. a roller shutter, a blind or the like for covering a building aperture exists. These may be installed to cover an existing building aperture cover such as a window in order to cover the window pane, e.g. for reducing flow of sunlight through the window pane. An electric motor can hence adjust a covering part or covering parts of the building aperture cover in order to adjust the amount of sunlight entering through the window pane. For powering the electric motor, a rechargeable battery may be provided which is recharged by a photovoltaic panel, in order to assure that sufficient power is available over time. An additional electrically driven drive unit may be provided for opening and closing the window.

EP 3 267 212 A1 discloses a solution for selecting a solar panel for the production of a motor operated device for use in a window opening, and a rechargeable battery can be recharged by the solar panel. EP 2 597 245 A1 discloses another solution where interchangeable appliance members are provided. Still further solutions exists where the electric motor is powered from the utility grid.

However, the above solutions suffer from drawbacks as they may e.g. be space consuming, provide issues in relation to compatibility and/ or may lack user-friendliness. The present disclosure may e.g. help to reduce one or more of these issues.

### Summary

The present disclosure relates in a first aspect to a building aperture cover system, wherein the building aperture cover system comprises:
a first building aperture cover and a first electrically driven drive unit configured to adjust a covering part of the first building aperture cover,
a first rechargeable battery unit configured to store electric power and supply electric power to the first electrically driven drive unit,
a photovoltaic power supply panel,
a switching arrangement connected to the photovoltaic power supply panel at an input connection so as to receive electric energy from the photovoltaic power supply panel, wherein the switching arrangement comprises
   - a switching circuitry configured to switch between a first switch state and a second switch state, and
   - a switching controller configured to control the switching circuitry,
wherein the switching arrangement is configured to supply electric energy from the photovoltaic power supply panel at a first connection to recharge the first rechargeable battery unit when the switching circuitry is in the first switch state. The building aperture cover system may moreover comprise
   - a second building aperture cover,
   - a second electrically driven drive unit configured to adjust a covering part of the second building aperture cover, and
   - a second rechargeable battery unit configured to store electric power and supply electric power to the second electrically driven drive unit,
wherein the second rechargeable battery unit is configured to receive electric energy from the switching arrangement from a second connection to recharge the second rechargeable battery unit when the switching arrangement is in the second switch state. The switching controller (6) is configured to switch between the first switch state and the second switch state based on at least one predefined criteria.

This e.g. provides a solution which may be easy to install in relation to retrofitting the first building aperture cover to a second building aperture cover. Alternatively or additionally, it may provide a space saving solution that may be used for smaller building aperture covers such as smaller window.

It may also help to provide a power supply solution where reduced risk of malfunction over time may be provided after retrofitting.

Often the access is restricted due to height or aperture size and the photovoltaic panel is a delicate component. The above may provide a solution where installing the wires and photovoltaic panel(s) may be more effortless with reduced points of failure. There is an effort in making end user upgrades and retrofit as easy as possible. The second output allows such easier upgrades.

The switching arrangement may help to provide a solution that is space saving as only one photovoltaic panel may supply and recharge two batteries of different independent electric systems. Additionally or alternatively, the switching arrangement may provide improved backwards compatibility.

The second building aperture cover, the second electrically driven drive unit configured to adjust a covering part of the second building aperture cover, and the second rechargeable battery unit configured to store electric power and supply electric power to the second electrically driven drive unit may e.g. have been preinstalled at a building. Hence, the second rechargeable battery unit may be connected to be supplied with electric energy from the photovoltaic panel through the switching arrangement, when the switching arrangement is in the second switch state, for example when retrofitting the first building aperture cover to the second building aperture cover.

In one or more aspects of the present disclosure, the switching controller may be configured to toggle the switching circuitry between the first switch mode and second switch mode based on the at least one predefined criteria.

This may e.g. help to provide a simple and cost efficient solution that may be advantageous in relation to e.g. retrofitting.

In one or more aspects of the present disclosure, the switching controller may be configured to provide an open loop control of the switching circuitry.

This may e.g. help to provide a simple and cost efficient solution that may be advantageous in relation to e.g. providing a retrofitting option.

The present inventor has seen that providing more complex solutions in relation to e.g. retrofitting solutions may be dis-advantageous. The inventor has however surprisingly found that an open loop control solution provided by the switching controller, e.g. based on input from a timer arrangement, may be able to provide an alternating charging that is sufficient for assuring enough energy over time in two independent batteries of different electric systems for adjusting covering parts of different building aperture covers, also at geographic areas and/or where the energy in the sunlight may be rather low when seen over a yearly period.

The open loop control system may hence be configured to control the switching circuitry to switch between the first switch state and the second switch state automatically and continuously during normal operation.

In one or more aspects of the present disclosure, the predefined criteria may comprise an output from a timer arrangement, such as a countdown timer.

A timer arrangement, such as a countdown timer arrangement, may be a simple, yet sufficient way of providing the switching of the switching arrangement. The timer arrangement may provide an open loop control system, or it may in other aspects of the present disclosure be part of a closed loop control system.

In one or more aspects of the present disclosure, the output from the timer arrangement may be configured to be provided at the expiry of a predefined charging time period.

The present inventor has found that such a solution may be simple, cost efficient and yet help to provide a solution which may be usable for switching to obtain sufficient charging and be compatible, e.g. backwards compatible with older, e.g. already installed, building aperture covers and electric systems.

In one or more aspects of the present disclosure, a charging time period before switching from one of said switch states to the other of said switch states may be configured to be more than 1 second, such as more than 1 minute, such as more than 4 minutes or more than 10 minutes.

For example wherein the expiry of a predefined time period may be provided with a time interval that is between 1 second and 240 minutes, e.g. between 1 minute and 60 minutes, such as between 2 minutes and 10 minutes, for example around five minutes.

In one or more aspects of the present disclosure, the second rechargeable battery unit may be configured to receive electric energy from a first converter arrangement comprising a Switched Mode Power Supply converter,
wherein the first converter arrangement is configured to convert electric energy from the photovoltaic power supply panel so as to provide a second supply voltage level when the switching circuitry is in the second switch state, wherein the second supply voltage level is different from a first supply voltage level provided at the first connection when the switching circuitry is in the first switch state.

This may e.g. help to improve backwards compatibility with older systems operating at different voltage levels than a voltage level provided by the photovoltaic panel connected to (or to be connected to) the switching arrangement.

The Switched Mode Power Supply converter of the first converter arrangement may in aspects of the present disclosure be a step-up converter, also known as a boost converter.

In one or more aspects of the present disclosure, the switching arrangement may comprise said first converter arrangement.

This may e.g. help to improve backwards compatibility with older systems and/or help provide a more simple and/or space saving solution. In other aspects of the present disclosure, the first converter arrangement may also be placed at another location away from the switching arrangement.

In one or more aspects of the present disclosure, a charging controller may comprise a Maximum Power Point Tracking (MPPT) feature, wherein the MPPT feature is configured to retrieve one or more output parameters provided by means of the input connection, and adapt the pulse width modulation of the Switched Mode Power Supply converter of the first converter arrangement based thereon.

This may help to provide an improved utilization of the photovoltaic panel. Additionally or alternatively, it may help to provide an improved charging of batteries in case a retrofitting is provided where the switching arrangement is installed.

In case the system comprises a MPPT feature, the charging time period may preferably be more than 1 minute, such as more than 2 minutes, for example around or more than 5 minutes. This may help to assure more efficient charging as the MPPT feature is allowed to "tune in" on an optimal or improved load on the photovoltaic panel.

In one or more aspects of the present disclosure, the switching arrangement is, when in the first switch state, configured to transfer electric energy from the input connection to the first connection with a substantially unchanged voltage level when compared to the voltage level at the input connection.

This may e.g. be advantageous from a compatibility point of view. It may e.g. be combined with that the switching arrangement comprises a first converter arrangement as mentioned e.g. above, so that the switching arrangement provides the voltage level at the input connection of the switching arrangement in the first state, and the second supply voltage level in the other switch state (by means of the first converter arrangement).

In the first switch state, the switching circuity may in aspects of the present disclosure provide a short circuit between the input connection and the first connection, such as a first output connection e.g. comprising a plug or socket.

In one or more aspects of the present disclosure, a converter arrangement, such as a further converter arrangement, comprising a Switched Mode Power Supply converter may be configured to charge the first rechargeable battery unit with energy received from the first connection of the switching arrangement.

This converter arrangement configured to charge the first rechargeable battery unit may e.g. be placed in an enclosure together with the first rechargeable battery unit and the first electrically driven drive unit.

In one or more aspects of the present disclosure, a charging controller may comprise a first Maximum Power Point Tracking (MPPT) feature configured to retrieve one or more output parameters provided by means of the first output connection and adapt the pulse width modulation of the converter arrangement based thereon. The converter arrangement may here be the converter arrangement comprising the Switched Mode Power Supply converter configured to charge the first rechargeable battery unit with energy received from the first connection of the switching arrangement.

In one or more aspects of the present disclosure, the first converter arrangement and/or the further converter arrangement may comprise a step-up converter, also known as a boost converter. The converter(s) may hence step up the voltage received from the photovoltaic panel to a higher DC voltage.

In some aspects of the present disclosure, different MPPT features/arrangements for adjusting PWM of different switched mode power supply converters may be placed at different locations. For example one of the MPPT features/arrangements may be placed in an enclosure/housing together with an electric drive unit and a battery to be charged, and the other may be in/at the switching arrangement, e.g. at another enclosure, to e.g. provide the second voltage as previously mentioned.

The switching arrangement may in aspects of the present disclosure assure that the MPPT features are only active in an alternating manner. This may e.g. help to provide e.g. a more stable charging solution system comprising different MPPT features.

It is generally understood that a MPPT feature(s) according to the present disclosure may be software implemented and executed by means of the charging controller. Hence, when the MPPT feature is executed, the MPPT feature retrieves output parameters based on the energy received at the input connection, e.g. by means of one or more measurement circuitries such as voltage and/or current measurement arrangements. Hence, based on these, a MPPT regulation may be provided, e.g. by means of a "perturb and observe feature" based on the output parameters.

The output parameters may generally be parameters provided by measurement circuitry/arrangements such as voltage and/or current measurement representative of the voltage and/or current output of the photovoltaic panel, and hence acts as input for the MPPT feature.

In one or more aspects of the present disclosure, an enclosure encloses the first rechargeable battery unit and the first electrically driven drive unit, and wherein said enclosure is separate to a further enclosure that encloses at least the second electrically driven drive unit and the second rechargeable battery unit.

Generally, in one or more aspects of the present disclosure, the above-mentioned enclosures may enclose each their electrical systems (comprising electrical drive unit(s), battery, system controller, transceiver/receiver and/or the like) that are control-wise independent and may be configured to operate different electrical drive units according to different sets of rules.

In one or more aspects of the present disclosure, the enclosure enclosing the first rechargeable battery unit and the first electrically driven drive unit furthermore encloses a converter arrangement comprising a switch mode power supply configured to charge the first rechargeable battery unit with energy received from the first connection.

This may e.g. be advantageous from a compatibility point of view. The enclosure may also enclose a charging controller as previously described.

In one or more aspects of the present disclosure, one or more insulated charging wires may extend between said enclosures and the switching arrangement. For example, in one or more aspects of the present disclosure, said one or more insulated charging wires may comprise a first charging wire for charging the first rechargeable battery unit, and a second charging wire for charging the second rechargeable battery unit.

The charging wires(s) may preferably be insulated and comprise a wire insulation surrounding the one or more electric wires in order to provide electrical insulation. This wire insulation may furthermore in further aspects be surrounded by a common flexible insulating cable jacket. The wire and/or cable jacket insulation may e.g. comprise a plastic and/or rubber material.

In one or more aspects of the present disclosure, said switching arrangement may be arranged in a first enclosure, wherein the first enclosure is separate to a second enclosure, wherein the second enclosure encloses the first rechargeable battery unit and the first electrically driven drive unit. Additionally or alternatively, in one or more aspects of the present disclosure, said switching arrangement may be arranged in a first enclosure wherein the first enclosure is separate to a third enclosure, wherein the third enclosure encloses the second electrically driven drive unit and the second rechargeable battery unit.

In one or more aspects of the present disclosure, said switching arrangement may be arranged in a first enclosure, wherein said first enclosure is separate to an enclosure which encloses the second electrically driven drive unit and the second rechargeable battery unit.

This may e.g. be advantageous in relation to retrofitting and/or general compatibility.

One or more first electric charging cables or wires, preferably insulated cable or wires, may hence in aspects of the present disclosure connect the switching arrangement with an electric system in in the second and/or third enclosure in order to provide a charging of the battery, where the charging is controlled by the switching arrangement in the first enclosure.

In one or more aspects of the present disclosure, a charging wire connects a second connection, such as an output connection, in the first enclosure with the second rechargeable battery unit. This may in further aspects of the present disclosure be provided by means of one or more plug and socket connections, so as to provide a re-charging of the second rechargeable battery unit.

In one or more aspects of the present disclosure, a charging wire connects a first connection, such as an output connection, in the first enclosure with the first rechargeable battery unit. This may in further aspects of the present disclosure be provided by means of one or more plug and socket connections, so as to provide a re-charging of the first rechargeable battery unit.

It is generally understood that in one or more aspects of the present disclosure, the photovoltaic panel may be connected to the input connection in the first enclosure which encloses the switching arrangement by means of a cable, e.g. by a plug and socket connection.

In one or more aspects of the present disclosure, the first building aperture cover may be is a window covering, such as a shutter, e.g. a roller shutter, or a blind such as an awning blind, a roller blind or venetian blind.

In one or more aspects of the present disclosure, the second building aperture cover may be a window, such as a roof window. Here, the covering part of the second building aperture cover may in aspects of the present disclosure comprise an insulated glass pane arranged in a sash, which is connected to a fixation frame by means of a hinge connection. Hence, the second electrically driven drive unit configured to adjust a covering part of the second building aperture cover may comprise or be a window opener.

In one or more aspects of the present disclosure, an enclosure enclosing the second electrically driven drive unit and the second rechargeable battery unit may be attached to or embedded in the second building aperture cover.

In one or more aspects of the present disclosure, said first enclosure may be configured to be mounted in a mounting arrangement, such as a mounting trail arrangement, of the first and/or second building aperture cover.

In one or more aspects of the present disclosure, said mounting arrangement may be arranged at an exterior, outwardly facing surface of the building aperture cover, such as the first building aperture cover.

In one or more aspects of the present disclosure, the photovoltaic power supply panel and/or a rain sensor may moreover be mounted in said mounted arrangement.

In one or more aspects of the present disclosure, an enclosure enclosing the first rechargeable battery unit and the first electrically driven drive unit, may be attached to or embedded in the first building aperture cover.

In one or more aspects of the present disclosure, the first building aperture cover may be configured to be connected to or mounted on the second building aperture cover.

In one or more aspects of the present disclosure, a part of the first building aperture cover is configured to cover a mounting arrangement such as a trail arrangement of the of the second building aperture cover when correctly connected to or mounted on, such as retrofitted onto, the second building aperture cover.

This may e.g. provide aesthetic advantages, an advantage in relation to obtaining a space saving solution and/or or a solution that is advantageous in order to obtain weather protection.

In one or more aspects of the present disclosure, said photovoltaic power supply panel may be a Crystalline, such as a mono crystalline, silicon photovoltaic power supply panel, additionally or alternatively, in one or more aspects of the present disclosure, said photovoltaic power supply panel may comprise between 3 and 15 solar cells, such as between 5 and 9 solar cells.

In one or more aspects of the present disclosure, the photovoltaic power supply panel has a rated maximum output voltage that is below 10V DC, such as below 8V DC, for example below 6V DC, such as around 4.2V DC.

In one or more aspects of the present disclosure, a first system controller may be configured to operate the first electrically driven drive unit according to one or more predefined rules based on input from one or more input units, wherein said input comprises one or more of the following:
- one or more timers and/or clock functionalities
- control signals received by mans of a receiver or transceiver,
- one or more sensors such as a rain sensor, a temperature sensor and/or a light sensor.

In one or more aspects of the present disclosure, wherein the first rechargeable battery unit may be configured to power the first system controller and/or one or more of said input units.

In one or more aspects of the present disclosure, a second system controller may be configured to operate the second electrically driven drive unit according to one or more predefined rules based on input from one or more input units, wherein said input comprises one or more of the following:
- one or more timers and/or clock functionalities,
- control signals received by mans of a receiver or transceiver,
- one or more sensors such as a rain sensor, a temperature sensor or a light sensor.

In one or more aspects of the present disclosure, the second rechargeable battery unit may be configured to power the second system controller and/or one or more of said input units.

In one or more aspects of the present disclosure, the first system controller and the second system controller may be arranged in each their enclosure.

In one or more aspects of the present disclosure, said first connection and/or second connection are output connections of the switching arrangement, such as a plug and socket connection, e.g. separate plug and socket connections.

The present disclosure moreover relates to a method of installing a power supply system according to the first aspect. Said method comprises:
- providing the first building aperture cover, the first electrically driven drive unit, the first rechargeable battery unit, a first photovoltaic power supply panel and the switching arrangement,
- dismantling an existing recharge wire connection configured to recharge the second rechargeable battery unit by means of energy received from a photovoltaic panel, and
- establishing a recharge wire connection between the second rechargeable battery unit and an output connection of the switching arrangement so as to enable supply of electric energy from the first photovoltaic power supply panel to the rechargeable battery unit through the switching arrangement.

This may e.g. provide one or more of the advantages as explained above. The method may be a retrofitting method where the method is part of a method of retrofitting the first building aperture cover to the second building aperture cover, e.g. in case a building owner, after installation of second building aperture cover suddenly decides to add the first building aperture cover to the second building aperture cover.

In one or more aspects of the present disclosure, the method may furthermore comprise the step of establishing a recharge wire connection between an output of the switching arrangement and the first rechargeable battery unit so as to enable supply of electric energy from the photovoltaic power supply panel to recharge the first rechargeable battery unit. In other aspects, the recharge wire connection between an output of the switching arrangement and the first rechargeable battery unit may be preinstalled at delivery of the first building aperture cover.

It is understood that the recharge wire connection between an output of the switching arrangement and the first rechargeable battery unit provides an electric connection that enables charging of the first rechargeable battery unit. But the wire connection may not be connected directly to the first rechargeable battery unit, it may rather be connected to a plug in an enclosure enclosing the first rechargeable battery unit, and a circuitry, e.g. comprising a converter arrangement as previously explained may hence transfer charging energy received through the wire to the first rechargeable battery unit.

In one or more aspects of the present disclosure, the step of establishing the recharge wire connection to enable supply of electric energy from the photovoltaic power supply panel to the rechargeable battery unit through the switching arrangement comprises reusing an input connection, such as a plug or socket connection, that was used for connecting said dismantled, existing recharge wire connection to recharge the second rechargeable battery unit.

In one or more aspects of the method, the switching arrangement may be is arranged in/placed in a first enclosure, and the method may comprise the step of mounting said first enclosure in a mounting arrangement, such as a mounting trail arrangement, of the first and/or second building aperture cover.

In one or more aspects of the method, said switching arrangement may be arranged in a first enclosure, wherein the first enclosure is separate to a second enclosure which encloses the first rechargeable battery unit and the first electrically driven drive unit, and wherein the first enclosure and the second enclosure are separate to a third enclosure which encloses the second electrically driven drive unit and the second rechargeable battery unit.

In one or more aspects of the method, the recharge wire connection between the second rechargeable battery unit and an output connection of the switching arrangement may extend between the first enclosure and the second enclosure, and wherein a second recharge cable connection extends between the first enclosure and the third enclosure.

In one or more aspects of the method, the method may comprise the step of retrofitting the first building aperture cover onto the second building aperture cover. In one or more further aspects of the method, a part of the first building aperture cover may cover a mounting arrangement such as a trail arrangement for a photovoltaic panel of the of the second building aperture cover after said retrofitting.

### Figures

Aspects of the present disclosure will be described in the following with reference to the figures in which:
- fig. 1: : illustrates a building aperture cover system comprising two building aperture covers according to embodiments of the present disclosure,
- fig. 2: : illustrates a pivot window according to embodiments of the present disclosure,
- fig. 3: : illustrates a top-hung window according to embodiments of the present disclosure,
- fig. 4: : illustrates a building aperture cover system comprising a switching arrangement, according to embodiments of the present disclosure,
- fig. 5: : illustrates a building aperture cover system comprising a switching arrangement, according to further embodiments of the present disclosure,
- fig. 6: : illustrates a building aperture cover system comprising a switching arrangement, and a converter arrangement arranged between a switching arrangement enclosure and a further enclosure, according to further embodiments of the present disclosure,
- fig. 7: : illustrates a switching arrangement, according to further embodiments of the present disclosure,
- figs. 8-9: : illustrates a switching provided by a switching controller over time, according to various embodiments of the present disclosure,
- fig. 10: : illustrates a converter arrangement according to embodiments of the present disclosure,
- fig. 11: : illustrates a window opener according to embodiments of the present disclosure,
- fig. 12: : illustrates a building aperture cover system provided by means of retrofitting, according to embodiments of the present disclosure.

### Detailed description

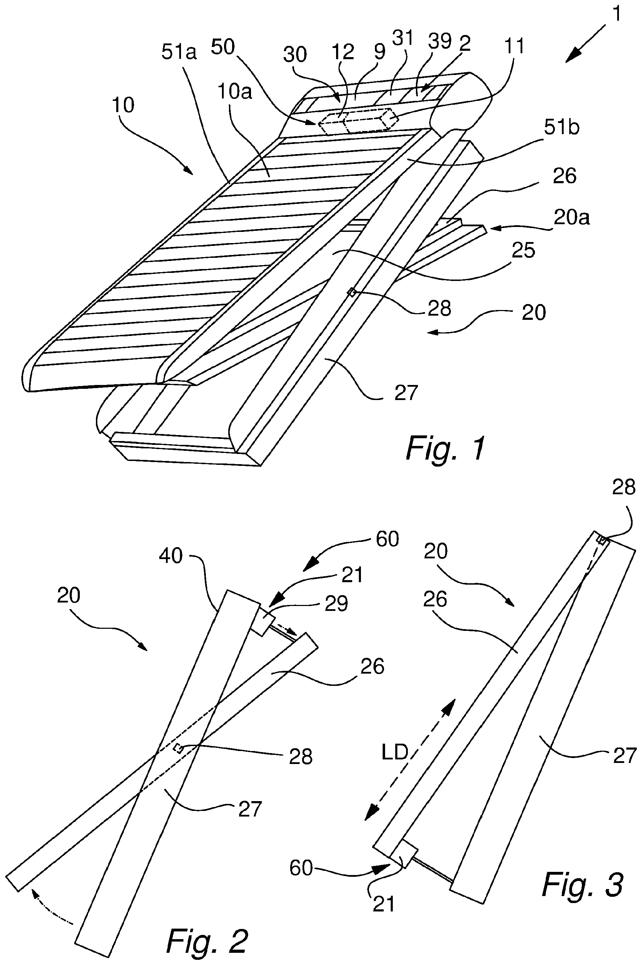

Fig. 1 illustrates schematically a building aperture cover system 1 according to embodiments of the present disclosure, comprising a window 20 being a roof window, seen in perspective.

The roof window 20 comprises an adjustable cover part 20b comprising an adjustable sash 26 with an insulated glass pane 25 arranged therein. The glass pane 25 may e.g. be a gas filled glass pane or a vacuum insulated glass unit, and may comprise one, two or more heat insulating sealed spaces separated by glass sheets. The sash 26 in the example of fig. is a "center pivot" sash, but it may also in other embodiments of the present disclosure be a top-hinged sash, see fig. 3. The sash 26 is configured to be moved at a hinged connection 28, relative to a fixed frame part 27 attached/fixed to a building construction such as a roof construction or the like.

In further embodiments of the present disclosure (not illustrated), the window 20 may be a vertical window configured to be arranged in an outer vertical wall of the building below the roof of the building.

As can be seen, the system in fig. 1 also comprises a further building aperture cover in the form of an architectural covering 10, in this example a roller shutter, but it may also be a blind such as a venetian blind, a roller blind or the like in further embodiments.

The system 1 in fig. 1 comprises both the first building aperture cover 10 in form of the architectural covering being a roller shutter, and the second building aperture cover being the window 20.

A first electric system 50 is configured to operate the architectural covering 10 and comprises a first electrically driven drive unit 11 such as an electric motor (and e.g. also comprising a gear) configured to adjust the covering/screening part 10a of the first building aperture cover 10 in order to adjust the amount of sunlight entering through the window pane 25 of the second covering part 20a.

In case the first building aperture cover 10 is a roller shutter, the covering/screening part 10a may comprise a plurality of slats to be rolled up and into an enclosure or out of an enclosure dependent on the rotation direction of the electrically driven drive unit 11. It is however understood that the covering part 10a may also comprise a flexible fabric or sheet material dependent on the type of covering device, e.g. if the covering device 10 is a blind such as a roller blind in other embodiments.

A first rechargeable battery unit 12 of the first electric system 50 stores electric power and supply electric power (see power supply line 11a between 11 and 12) to the first electrically driven drive unit 11. In order to recharge the battery 12, a photovoltaic power supply panel (9) is provided. This photovoltaic power supply panel 9 is releasable mounted in a mounting arrangement 30, such as a mounting trail/track arrangement as illustrated, of the first building aperture cover 10.

The mounting trail/track 30 is arranged at an exterior, outwardly facing surface of the building aperture cover 10 at an upper part of the cover 10 in order to allow sunlight to radiate towards the panel 9. The trail 30 may hence e.g. be arranged above the space where the covering part 10a is configured to extend as illustrated. The covering part 10a may e.g. be adjusted by the electric drive 11 into the space defined between two parallel rails 51a, 51b for guiding and holding the covering part 10a so that the cover part 10a covers a part of the window pane 25.

The photovoltaic power supply panel 9 may in embodiments of the present disclosure be a Crystalline, such as a mono crystalline, silicon photovoltaic power supply panel. the panel may in some embodiments comprise between 3 and 15 solar cells, such as between 5 and 9 solar cells. The photovoltaic power supply panel 9 may have a rated maximum output voltage that is below 10V DC, such as below 8V DC, for example below 6V DC, such as around 4.2V DC.

A rain sensor 31 may in embodiments of the present disclosure also be installed at the mounting trail/track 30. The rain sensor provides input to a controller (not illustrated) that controls the position of the window sash 26, and automatically closes the window in case the rain sensor provides input indicating that it rains.

It is understood that the parts 9, 31, 39 placed in the trail/track 30 may be mechanically mounted in the trail/track and interchangeable and hence dismountable from the trail e.g. for replacement purpose. The mounting may be provide by a rail system, a latch-notch system, a click system or the like.

As illustrated, the battery 12 the motor 11 and/or the like may be arranged at an upper part of the cover 10, e.g. in a common casing as described in more details later on.

It is understood that in other embodiments of the present disclosure, the photovoltaic power supply panel 9 may be placed at another location than in a track, such as e.g. arranged on or integrated in the adjustable covering part 10a.

Moreover, the building aperture cover system 1 comprises a further, second electric system 60 (not illustrated in fig. 1 in order to improve drawing simplicity) that is provided for adjusting, i.e. opening and closing, the window 20.

Fig. 2 illustrates schematically the further electric system 60 mounted on or integrated in the second building aperture cover 20 in the form of the window. The first building aperture cover 20 is here omitted from fig. 2 in order to illustrate the second building aperture cover 20 before the first building aperture cover 10 is mounted thereon. When the first building aperture cover 10 is absent, the window 20 may itself comprise a mounting track 40 or the like (see fig. 2) for a photovoltaic panel (not illustrated) and in case a first building aperture cover 10 such as a roller shutter 20 is later added during a retrofitting operation/installation, the already present photovoltaic panel may in some situations be moved to the track 30 of the covering 10 instead if there is sufficient space at track 30 and the track 40 is e.g. covered by the first building aperture cover 10. However, for example for smaller, such as narrower, windows, there may not be enough space in the track/trail 30 for both photovoltaic panels due to their reduced width. A switching arrangement 2 may hence be provided according to embodiments of the present disclosure, as described in more details later on. Additionally or alternatively some situations may occur where the compatibility between the first electric system 50 for adjusting the first cover part 10a and the second electric system 60 for adjusting the second cover part 10a, 20a may be challenged. Hence, in some situations, the original photovoltaic panel in the track 40 may be discarded or saved for other purposes, and another photovoltaic panel 9, e.g. supplied together with the building aperture cover 10, may be provided and installed to supply power to rechargeable batteries of both systems 50, 60.

The systems 50, 60 are control-wise independent and may be configured to operate according to different sets of rules and comprises each their electric drive and each their rechargeable battery as well as each their controller for operating the respective cover 10a, 20a by means of each their electric drive such as an electric motor, e.g. also comprising a gear.

In embodiments of the present disclosure (not illustrated), a plurality of windows 20 with coverings 10 may be arranged in a building, such as in the roof construction of the building (not illustrated). Individual, self-sufficient electric, battery powered systems 50, 60 are here arranged to control the individual window covering part 20a and individual covering part 10a respectively.

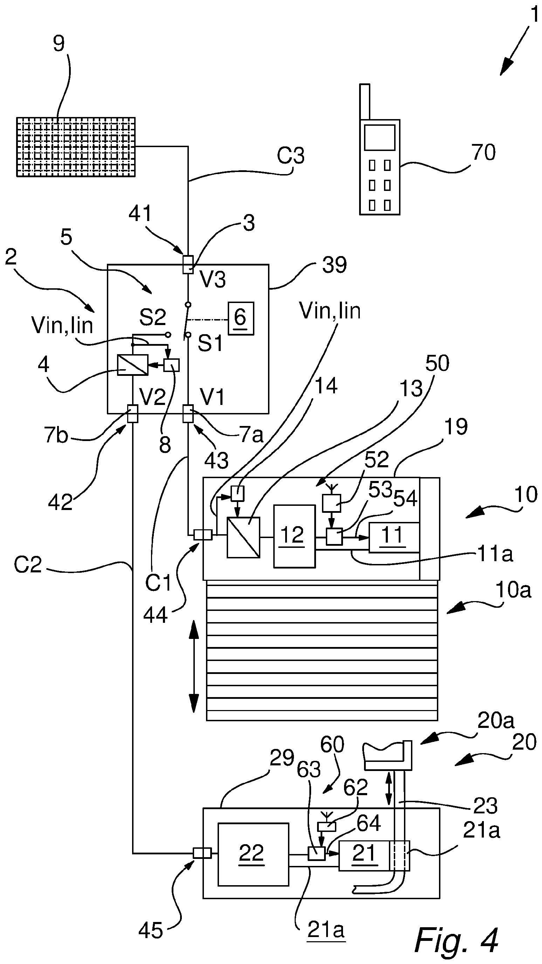

Fig. 4 illustrates schematically a building aperture cover system 1 according to embodiments of the present disclosure comprising the first building aperture cover 10 and a first electrically driven drive unit 11 configured to adjust a covering part 10a of the first building aperture cover 10. A first rechargeable battery unit 12 is configured to store electric power and supply electric power to the first electrically driven drive unit 11.

A switching arrangement 2 is connected at an input connection 3 to a photovoltaic power supply panel 9 by means of a power supply cable or wire C3 extending between the panel 9 and the input connection 3. The input connection may comprise a plug and socket connection 41

The switching arrangement 2 comprises a switching circuitry 5 configured to switch between a first switch state S1 and a second switch state S2, and a switching controller 6, such as a micro controller configured to control the switching circuitry 5 in order to switch, such as toggle between the first switch state S1 and the second switch state S2 based on at least one predefined criteria.

The switching arrangement 2 is configured to switch between supplying electric energy from the photovoltaic power supply panel 9 at a first output connection 7a so as to recharge the first rechargeable battery unit 12 when the switching circuitry 5 is in the first switch state S1, and to supplying electric energy from the same photovoltaic power supply panel 9 at a second output connection 7b when the switching circuitry 5 is in the second switch state S2.

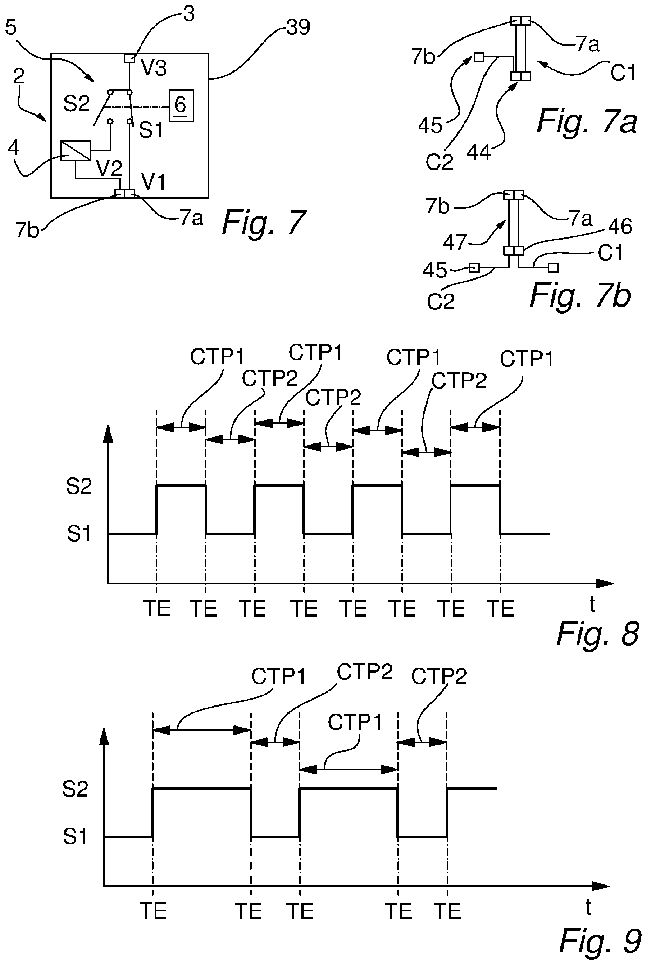

The switching circuitry 5 may be provided by a toggle configuration and e.g. comprise a Single Pole Double Throw (SPDT) switch arrangement, a Single Pole Single Throw (SPST) arrangement comprising more than one switch and/or the like, see also fig. 7.

The switching circuitry 5 may in one or more embodiments of the present disclosure comprise one or more mechanical switches, however, in further, more preferred aspects, the switching circuitry may comprise a semiconductor arrangement comprising one or more transistors, such as one or more MOSFETs (metal-oxide-semiconductor field-effect transistor) providing the switching between the states S1, S2.

The first output connection 7a is connected to the first electrical system 50, such as by means of a plug and socket arrangement 43 for connecting a wire or cable C1 from the switching arrangement 2 to the first electric system 50 through an input connection 44 such as a plug and socket connection of the first system. Hence, the first system 50 is provided with electric power from the photovoltaic panel 9 when the switch arrangement 5 is in the first switch state S1 (as illustrated in fig. 4).

A converter arrangement 13 comprising a Switched Mode Power Supply converter such as a boost converter is configured to charge the first rechargeable battery unit 12 with energy received from the first output connection 7a of the switching arrangement 2. Through the cable or wire C1.

A charging controller 14, such as a micro controller, comprises a Maximum Power Point Tracking (MPPT) feature which is configured to retrieve one or more output parameters such as input voltage Vin and/or input current Iin provided to the input 44 through from the first output connection 7a of the switching arrangement 2 through the cable or wire C1, and adapt the pulse width modulation of the converter arrangement 13 based thereon. The MPPT feature may preferably be a "perturb and observe" solution where a PWM signal to the converter 13 is regulated in order to find a maximum power point (MPP) under the present conditions such as sunlight conditions to provide an optimized energy supply to the battery 12.

The inputs Iin, Vin ,may be provided by means of measurement arrangements/circuitry configured to measure the voltage and/or current provided by the switching arrangement at the input 44.

The MPPT feature may enter a sleep mode in embodiments of the present disclosure where a PWM signal is maintained while no MPPT feature is executed, in order to save battery. The awakening from the sleep mode may be controlled by an interrupt arrangement and a timer, so that the MPPT feature is executed relatively rarely in order to save energy, e.g. so that the MPPT feature is executed less than 500 times per second, such as less than 100 times per second, e.g. less than 5 times per second or even more rarely.

The charging controller 14 may be powered by energy from the panel 9 and not from the battery 12.

As is illustrated in fig. 4, the switching arrangement 2 is arranged in a first enclosure 39 and may be arranged e.g. in a trail/track 30 as previously described, see also fig. 1. The first enclosure 39 may e.g. be visible from the outside after installation when installed in the track/trail 30. In other embodiments of the present disclosure, the first enclosure 39 may be arranged at another location. The first enclosure/housing 39 may in some embodiments be smaller in length than the previous photovoltaic panel installed in the trail (40 see fig. 2) before the cover 10 is retrofitted to the cover 20, and hence it may be possible to install the system 1 in smaller window solutions.

The first enclosure 39 is separate to a second enclosure 19 that encloses the first rechargeable battery unit 12 the first electrically driven drive unit 11 and the converter arrangement 13 configured to charge the first rechargeable battery unit 12 with energy received from the first output connection 7a of the switching arrangement 2. The first rechargeable battery unit 12 hence receives electric energy from the power converter 13, which receives energy from the photovoltaic panel 9 through the switching arrangement when the switching circuitry 5 is in the first switch position S1.

The enclosure 19 may in embodiments of the present disclosure be a tubular enclosure of a tubular motor arrangement, where the enclosure encloses at least the rechargeable battery unit 12 and the first electrically driven drive unit 11. The enclosure 19 may hence be rotated by the drive unit 11 in order to role/wind the covering part 10a up and around the enclosure 19 in order to allow more sunlight inflow through the window pane, or unwind the covering part 10a from the enclosure 19 to reduce inflow of sunlight.

The building aperture cover system 1 moreover comprises a second building aperture cover 20, and a second electric system 60 comprising second electrically driven drive unit 21 such as an electric motor configured to adjust a covering part 20a, such as a sash and pane as previously described, of the second building aperture cover 20. This adjustment may be provided by means of an actuator 23 such as a push-pull chain actuator or another type of linear actuator that is controlled by the electrically driven drive 21 and is connected to the drive 21 e.g. through e.g. a gear 21a. The electric system 60 of the system 1 additionally comprises a second rechargeable battery unit 22 configured to store electric power and supply electric power to the second electrically driven drive unit 21, see power supply line 21a between 21 and 22.

In fig. 4, the second output 7b is connected to an electric cable or wire connection C2 at a connection 42 such as a plug and socket connection. The cable or wire C2 is connected at an input 45 to the electric system 60, preferably also by means of a plug and socket connection. This input may be the same input where a previous photovoltaic panel was connected.

In fig. 4, the cable or wire C2 connects the second output connection 7b of the switching arrangement 2 directly to the battery 22, with no converter arrangement there between.

A first converter arrangement 4 of the switching arrangement 2 is connected to the second rechargeable battery unit 22 through the output connection 7b and is configured to recharge the second rechargeable battery unit 22 when the switching arrangement 2 is in the second switch state S2. The first converter arrangement 4 comprises a switch mode power supply, such as a boost converter integrated as part of the switching arrangement 2 in the first enclosure 39. The first converter arrangement provides a second supply voltage level V2 that is different from a first supply voltage level VI provided at the first output connection 7a, this may however be dependent on the type of battery 22 arranged in the system 60.

In the embodiments of fig. 4, the output voltage V2 may be larger than the voltage VI and the switching arrangement 2 may hence in the first switch state be configured to transfer electric energy from the input connection 3 to the first output connection 7a with a substantially unchanged voltage level VI compared to the voltage level V3 at the input connection 3 set by the photovoltaic panel. Hence, when the switching circuitry 5 is in the first state S1, this may correspond to or be a short circuit between the input 3 and the first output connection 7a.

When the switching circuitry 5 is in the second switch state S2, and the connection between input 3 and first output connection is disconnected, the converter 4 receives power from the panel 9 and converts, such as boosts, the voltage V3 at the input 3 to a higher voltage level that may be required or preferred in order to fit this voltage V2 to the voltage of the battery 22 of the system 60.

The maximum voltage V1 at the first output connection 7a may be determined by the voltage provided by the photovoltaic panel 9 and may be below 10V DC, such as below 8V DC, for example below 6V DC, such as around 4.2V DC.

The voltage V2 provided by the converter 4 may be larger than voltage VI, e.g. between 10V and 30V DC, such as between 13V DC and 18V DC.

As can be seen from fig. 4, the converter arrangement 4 may be disconnected from the input 3 when the switching circuitry 5 is placed in the first state S1 by the controller 6.

In embodiments of the present disclosure, the switching arrangement 2 may as illustrated in fig. 4 moreover comprise a charging controller 8 such as a micro controller, comprising a Maximum Power Point Tracking MPPT feature, e.g. substantially similar to the one described above in relation to charging controller 14 of the first electric system 50, Hence, when the MPPT feature is executed, it is configured to retrieve one or more output parameters such as input voltage Vin and/or input current Iin provided from the panel 9 by means of the input connection 3, and adapt the pulse width modulation PWM of the first converter arrangement 4 based thereon.

Hence, in embodiments of the present disclosure, the switching controller 2 may comprise the first enclosure 39 enclosing the switching circuitry 5, the switch controller 6, the converter arrangement 4 comprising the switch mode power supply, and the charging controller 8. The input to the switching controller 2 may comprise an electric power supply cable or wire C3 from the photovoltaic panel for power supply at the input connection 3 to be distributed between the first and second systems 50, 60 by the switching circuitry 5, and the output may be a first voltage V1 at the first output connection 7a, and a second voltage V2 output at the second output connection 7b.

Generally, the MPPT features provided by the charging controllers 8, 14 may be configured to operate in a similar way, and may be substantially identical. However, only one MPPT feature is active at a time due to the switching arrangement 2, as the charging controller 8 may only be active when the switching circuitry 5 is in the second state S2, and the charging controller 14 may only be active when the when the switching circuitry 5 is in the first state S1. One or both of the charging controllers 8, 14 may be powered by the energy supply from the photovoltaic panel alone and not the battery 12 or 22. However, in other embodiments, e.g. the battery 12 may power the charging controller 14, and possibly also or alternatively the charging controller through a separate power wire (not illustrated).

In further embodiments, a rain sensor may also be connected to the system 60 through the switching arrangement (not illustrated). In that case, the cable or wire C2 and output connection 7b may also comprise electric connection for forwarding the signal from the rain sensor to the system 60, or a separate output and cable or wire may be provided for this purpose.

The rechargeable battery 12 or batteries 12, 22 may in embodiments of the present disclosure be a Lithium ion (Li-ion) battery, a Nickel Cadmium (NiCd), or a Metal Hydride (NiMH) Battery

As can be seen from fig. 4, the electric systems 50, 60 for operating each their covering 10, 20 may comprise each their wireless control signal receiver or transceiver 52, 62 configured to receive control signals such as radio signals from a remote controller 70 in order to facilitate adjustment of the respective covering part 10a, 20a on request of a user or a centralized control unit of a home automation system placed away from the systems 50, 60.

Additionally or alternatively, a system controller 53, 63 of the respective electric system 50, 60 may be configured to operate the respective drive unit 11, 21 according to predefined rules provided by a software program code of the respective system based on e.g. input from one or more input units such as
- one or more timers/clocks such as clock arrangement capable of keeping track on time on the day and/or night and calendar information, and/or countdown timers providing an output as input after desired, set time period.
- the (wireless) receiver or transceiver 52, 62,
- sensors such as climate or weathers sensors, e.g. temperature sensor, light sensor, and/or rain sensor
- other possible input devices such as force detection systems or the like for detecting an amount of force with which the actuator pushes at, and/or pulls in, the covering device 20, 10, e.g. as a safety precaution.

A first system controller 53 of the system 50 may hence be configured to operate the first electrically driven drive unit 11 according to one or more predefined rules based on input from one or more input units. In the same way, a second system controller 63 of the system 60 may hence be configured to operate the second electrically driven drive unit 21 by means of control signals 64 to the drive unit 21 according to one or more predefined rules based on input from one or more input units. These one or more rules may e.g. be different from the rules according to which the first system controller operates. For example, the system controller 63 of the system 60 may receive input from a rain sensor (not illustrated) in order to automatically close the cover part 20a when it rains and/or automatically at night according to timer/clock information. The first system controller 53 may control the cover device 10a by means of control signals 54 to the drive unit 11, based on input from an input device such as light sensor or a temperature sensor (not illustrated). Both the systems 50, 60 may moreover or alternatively be operate able by means of the same remote controller 70 or different remote controllers so that a user can adjust the covering devices 20a, 10a by means of the remote controller 70. Hence the respective system controller 53, 63 controls the respective drive unit 11, 21 dependent on input information in a control signal received from the remote controller.

It is understood that the respective system controller 53, 63 may be arranged inside the respective enclosure 19, 29 as e.g. illustrated in fig. 4.

It is understood that the system 1 in embodiments of the present disclosure may be master/slave controlled system where e.g. one of the system controllers 53, 63 or the remote control 70 may be a master unit and the remaining may be slave units. However, it may also be another type of system than a master/slave system.

It is generally understood that the system 1 may also in further embodiments f the present disclosure (not illustrated) be a part of a larger system comprising e.g. several windows and several covering devices, and in still further embodiments that more than one window cover 10 (such as a roller blind and roller shutter combination) may be arranged at the same widow and may also each comprise an electric system substantially similar to the systems 50 60.

It is generally understood that the same battery 12, 22 in embodiments of the present disclosure may power both the respective system controller 53, 63, the respective receiver/transceiver, the respective electrically driven drive unit, and optionally input devices such as sensors and/or the like, of the respective system 50, 60.

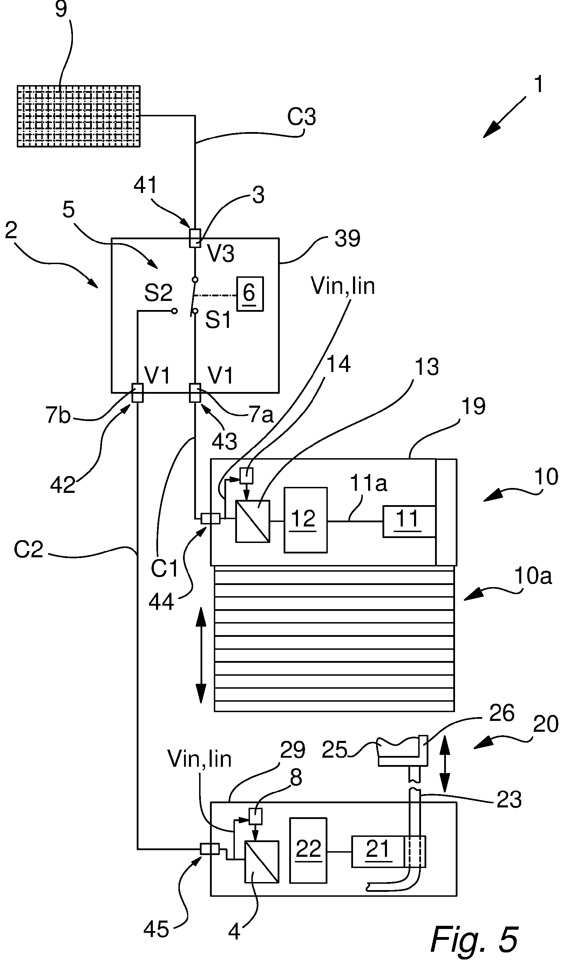

Fig. 5 illustrates a building aperture cover system 1 according to embodiments of the present disclosure. The system 1 substantially corresponds to the system illustrated and described above in relation to fig. 4. However, the system controllers and receiver/transceivers are omitted from the figure, but may e.g. be present in further embodiments of the present disclosure. Moreover, in fig. 5, the switching arrangement 2 does not comprise the converter arrangement 4. Instead, the converter arrangement 4 is in fig. 5 arranged in the housing/enclosure 29 that encloses the second system 60 together with the battery 22 and the drive unit 21, and is as such part of the second electric system. It is generally understood that the housing 29 in embodiments of the present disclosure may also comprise a storage space for the unextended part of the actuator 23, e.g. in case the actuator comprises a push-pull chain. The enclosure 29 may hence together with the electric system 60 and the actuator constitute an opener such as a window opener to be attached to or integrated in a window.

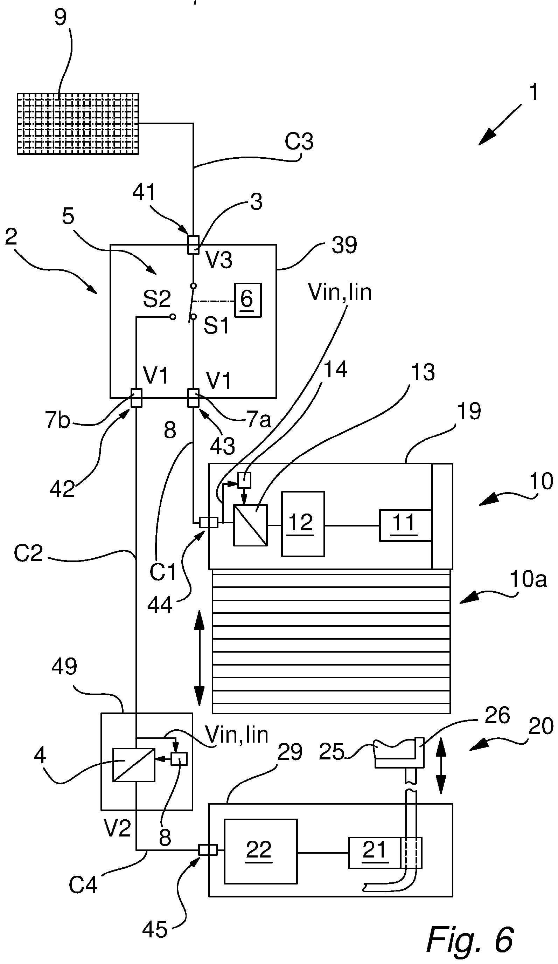

Fig. 6 illustrates a building aperture cover system 1 according to further embodiments of the present disclosure. The system 1 substantially corresponds to the system illustrated and described above in relation to fig. 4. However, the system controllers and receiver/transceivers are omitted from the figure, but may e.g. be present in further embodiments of the present disclosure. Moreover, in fig. 6, the converter arrangement 4 for providing a conversion of the voltage received from the panel 9 is placed in a separate enclosure 49 which is separate to the enclosures 19, 29, 39. The switching arrangement 2 hence comprises the switching circuitry 5 and the controller 6, whereas the part of stepping up the voltage so that the voltage level V2 is larger than voltage level V1 and/or voltage level V3 by means of the switch mode power supply of the converter arrangement 4 is placed inside the separate enclosure 40. A cable or wire connection C2 hence connects the second output 7b of the switching arrangement with the converter 4 in the enclosure. The enclosure 49 may be an integrated part of the cable/wire C2. In other embodiments, the cable/wire may C2 may be connected to the converter 4 in the enclosure by means of a socket and plug connection at the enclosure (not illustrated) or another plug/socket connection. A further charging cable or wire C3 hence connects the output of the converter arrangement 4 to the input 45 for the system 60, e.g. by means of a plug/socket connection.

It is generally understood that one or more of the charging wires C1, C2, C3 and/or C4 illustrated and/or described in relation to various embodiments described above in relation to figs. 4-6 and/or described below may comprise one or more insulated charging wires C1, C2, C4 extending between the enclosures 19, 29, 39, 49. The same may apply for the power supply cable interconnecting the panel 9 with the switching arrangement. These insulated charging wires comprises a wire insulation surrounding the one or more electric wires in order to provide electrical insulation and prevent undesired short circuit and/or to provide weather protection. This wire insulation may furthermore in further embodiments be surrounded by a common flexible insulating cable jacket. The wire and/or cable jacket insulation may e.g. comprise a plastic and/or rubber material. Plugs and/or sockets may be provided at the end of the cable(s) or wire(s).

Fig. 7 illustrates schematically a switching arrangement 2 according to further embodiments of the present disclosure. The switching arrangement 2 has the same functionality as described and/or illustrated in relation to e.g. figs. 4, 5 and/or 6. However, in fig. 7, the switching circuitry 5 here comprises two independent switches that are each controlled by the switching controller 6 to switch between switch state S1 and switch state S2.

Additionally, Fig. 7 illustrates a further embodiment of the present disclosure, wherein the same connection, such as a plug or socket, may provides both output connections 7a, 7b. Hence, a splitting may be provided at a wire or the like so that charging wires for both batteries 12, 22 extends from the switching arrangement 2 and to a splitting point, (e.g. at an input 44 or 45, see fig. 4 and/or fig. 7a), and from there, a wire may run to the other input (44, 45). A splitter arrangement 46 such as a plug and socket arrangement arranged at the end of a cable or wires 47 may also alternatively be provided to split out the charging wires/cables C1, C2 from the splitter 46.

However it may be preferred that individual wires or cables C1, C2 run from individual outputs 7a, 7b and to the respective input 44, 45 at the respective electric system 50, 60 as e.g. illustrated in fig. 4, 5 and/or 6.

Fig. 8 illustrates the switching of the switching arrangement over time t between switch state S1 and state S2, controlled by the switching controller.

As mentioned above, the switching controller 6 is configured to control the switching circuitry 5 in order to switch, such as toggle, between the first switch state S1 and the second switch state S2 based on at least one predefined criteria. This predefined criteria may e.g. comprise or merely consist of an output from a timer arrangement of the switch controller 6 which may be an integrated timer functionality in the controller 6 such as a micro controller. Alternatively, an external timer circuit may be provided as input to the controller 6. The timer arrangement may e.g. be a countdown timer, and the output from the timer arrangement may be configured to be provided at the expiry TE of a predefined charging time period CTP1, CTP2. Hence, the timer runs for a pre-set time period CTP, and upon expiry (See TE in fig. 8) of the time period, the controller 8 switches to either the switch state S1 or switch state S2 from the other switch state S1, S2.

The charging time period CTP1, CTP2 in which the switch controller 6 maintains the switching circuitry in either state S1 or state S2 before switching to the other of said switch states S1, S2 may be more than 1 second, such as more than 1 minute, such as more than more than 4 minutes or more than 10 minutes. For example, the charging time period CTP1, CTP2 may be between 1 second and 240 minutes, e.g. between 1 minute and 60 minutes, such as between 2 minutes and 10 minutes, for example around five minutes.

In other embodiments of the present disclosure, the timer arrangement may additionally or alternatively comprise a clock and/or calendar functionality, and the switching between switching state S1 and state S2 may hence be provided by the controller 6 at one or more predefined times within an hour or a day. This may also be changed over the year as the energy provided by the sun per time unit may change dependent on the time of year.

It is generally understood that the switching controller 6 may hence be configured to provide an open loop control or "non-feedback control" of the switching circuitry 5 and hence not rely on e.g. measured battery voltage, or measured or in other ways determined temperatures or the like. Hence, the switching controller may be configured to control the switching circuitry 5 to switch between the first switch state S 1 and the second switch state S2 automatically and continuously during normal operation independent on the output of the switching arrangement 2 over time.

In further embodiments of the present disclosure, the predefined criteria may however also or alternatively comprise temperature measurements, battery voltage measurements and/or the like, and threshold values related to these may be provided, and hence the switching controller may provide a feedback control/closed loop control of the switching arrangement 2.

It is moreover understood that the charging time periods CTP1, CTP2 in embodiments of the present disclosure may be configured to be either substantially similar as illustrated in fig. 8, but the charging time periods CTP1, CTP2 may also alternatively be set to different as illustrated in fig. 9, e.g. in case it is determined that the power consumption may be larger at one battery than the other (see batteries 12, 22 in figs. 4-6) over time, or in case the storage capacity in the batteries differ. In fig. 9, the charging time period CTP1 in which the switching circuitry is maintained in the state S2 is longer than the other charging time period CTP2 in which the switching circuitry is maintained in the state S1. The difference between the charging time periods CTP1, CTP2 may e.g. be so that one of the time periods, e.g. CTP1, is at least 25% longer, such as at least 50% longer, for example as at least 100% longer than the other charging time period CTP2. This may e.g. be adapted according to the ascertained power consumption on the respective battery and/or according to the type and/or size of battery used in the respective electric circuit 50, 60, see e.g. one or more of figs. 4-6.

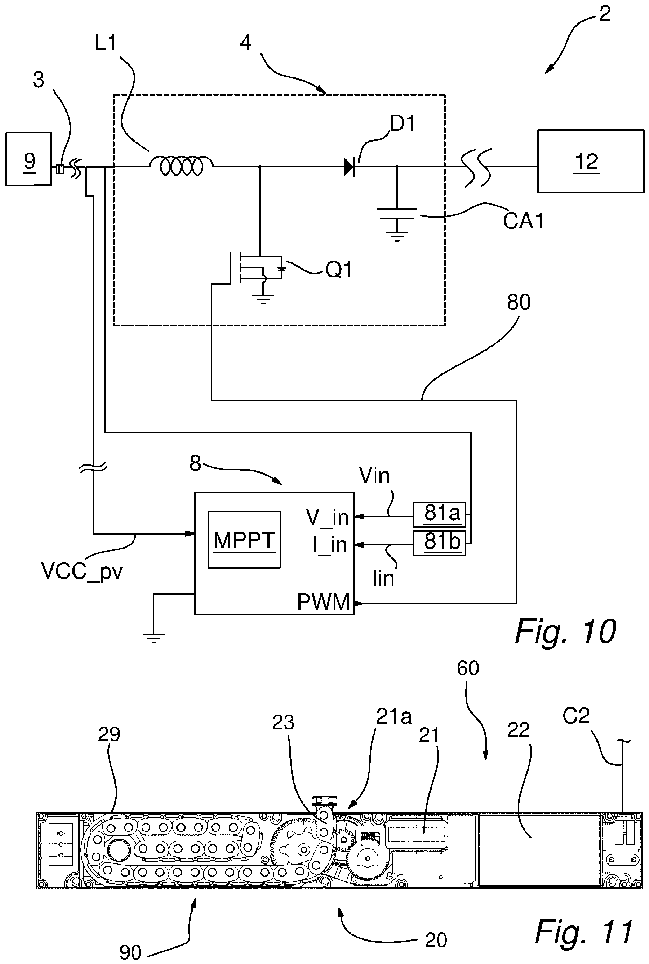

Fig. 10 illustrates schematically a switch mode power supply solution for a converter arrangement such as the voltage converter arrangement 3, 14 and/or such as the voltage converter arrangement 4, 8 described above in relation to one or more of figures 4-7. In the following, fig. 8 is however described where the converter arrangement is the above mentioned converter arrangement comprising the switch mode power supply 4 and the charging controller.

The switch mode power supply solution here provides a Maximum Power Point Tracking (MPPT) regulated boost converter 4 controlled by means of a charging controller 8 comprising an MPPT feature according to embodiments of the present disclosure.

The boost converter 4 comprises a boost converter circuitry comprising an inductor L1, a capacitor CA1, a diode D1 and a switching arrangement Q1 such as a transistor coupled as shown in fig. 10 in order to provide a DC-DC Pulse Width Modulated (PWM) Switch mode power supply boost converter 4. The boost converter 4 may also be referred to as a step-up converter.

Filters such as capacitor-implemented filters (not illustrated in fig. 10) may also be provided in further embodiments of the present disclosure at the load/battery side of the converter 4 and/or at the input/supply side of the converter 4, in order to reduce undesired voltage ripples.

The charging controller 8, such as a suitable micro controller, is configured to control the switch Q1 of the boost converter in order to provide a desired PWM at the boost converter 4. This is provided by the PWM control signal 80.

The micro controller of the charging controller 8 may in embodiments of the present disclosure comprise a 5 to 45 MHz, such as a 10 to 30 MHz, e.g. an around 20Mhz central processing unit (CPU) (values given as max. clock frequency of the CPU). The charging controller microcontroller may in embodiments of the present disclosure be a Microcontroller with Core Independent Peripherals. The CPU clock frequency may however in embodiments of the present disclosure be reduced significantly compared to the max clock frequency, such as reduced with a factor of between 20 and 60, such as around 40. For example, the clock frequency of the CPU of the controller may be reduced to a clock frequency between 250 kHZ and 2 MHz, such as between 450 and 750 kHz in order to save power.

A Microcontroller with Core Independent Peripherals may be advantageous to use as it may allow a PWM signal functionality to be implemented with a desired (and adjustable) duty cycle and period time/frequency to control the boost converter's switch, while the remaining part of the charging controller 3 can enter sleep mode so as to save power.

The charging controller 8 hence receives two inputs from measuring circuitries.
The first input Vin is a voltage measuring provided by a measuring/measurement circuitry 81a and is indicative of the voltage at/of the output of the photovoltaic panel 9.

The second input Iin is a current measuring provided by a measuring/measurement circuitry 81b and is indicative of the electric current supplied by the photovoltaic panel 9.

The measuring of the parameters Iin and Vin are preferably provided so that the voltage measuring and current measuring is provided to represent the total output of the panel 9.

The charging controller 3 provides a Maximum Power Point Tracking (MPPT) based on the measured inputs Iin, Vin and provides a control of the load (i.e. the battery 21, 11) on the panel based on the measured input. This load control is provided by adjusting the PWM signal to the switch Q1.

The inputs Iin, Vin ,may be provided by means of measurement arrangements/circuitry configured to measure the voltage and/or current provided by the photovoltaic panel 9 at the input connection.

As can be seen in fig. 10, the charging controller 3 may in embodiments of the present disclosure be powered VCC_pv by the photovoltaic power supply panel 9 and not the battery 12.

It is however understood that in one or more further embodiments of the present disclosure (not illustrated), the charging controller may be powered by the rechargeable battery instead of being powered by the at least one photovoltaic power supply panel 13a. In this case, the charging controller 8 may act as a further power consumption device powered by the rechargeable battery 12.

The charging controller 8 may in further embodiments of the present disclosure comprise a sleep mode which provides that the controller 8 enters a sleep mode, such as an "Idle sleep mode". Here, in the sleep mode, the Central Processing Unit of the controller 3 stops executing code, and an interrupt, such as a timer interrupt, can wake up the CPU again to execute stored program code for implementing the MPPT functionality.

However, even in sleep mode, a Main Clock of the charging controller 8 will run in order to control the switch by a switching frequency during sleep mode, which is set by the MPPT function before entering the sleep mode. This is done in order to provide a PWM of the boost converter 4 that fits or is near the Maximum Power Point of the photovoltaic panel, and that is provided automatically by the MPPT function.

The MPPT function may e.g. in embodiments of the present disclosure provide a "Perturb and observe" MPPT regulation. Here, the controller 3 adjusts the load, such as by increasing the load on the photovoltaic panel by a small amount; if the power provided by the panel 9 increases (based on Iin and Vin), further adjustments in that direction are tried until the power no longer increases. The MPPT functionality may then try to adjust the load by e.g. reducing the load In order to see if this increases to power output from the panel 9. The MPPT function is executed when the charging controller 8 is not in sleep mode.

Fig. 11 illustrates schematically an embodiment of the present disclosure where a window opener comprises an enclosure 29 that encloses the second electrically driven drive unit 21 and the second rechargeable battery unit 22. The enclosure additionally comprises a storage space 90 for storing the part of the actuator 23 in the form of the push/pull chain 23 which has not been moved out of the enclosure 29 by the electric drive 11 to open a window - see also fig. 2 and 3. The Photovoltaic power supply panel 9, converter arrangement(s), charging controller and/or the like are omitted from fig. 11 but may also be present in further embodiments of the present disclosure as e.g. previously described. The push/pull chain 23 is configured to move a sash of a window when operated by the drive unit 21, which is connected to the chain through a gear arrangement 21a..The enclosure here has a rectangular, oblong shape.

It is generally understood that one or more, preferably all of the enclosures 19, 29, 30, 49 generally provides a dust and/or water protection in order to screen the content in the enclosure from dust, water and/or the like. The enclosure may hence provide a housing comprising walls enclosing the space in which the electrical system(s) 50, 60 and/or the like is placed, and these walls may be made from a hard wall material such as a hard plastic material, a fibre reinforced material, a metal wall and/or the like when attached to a carrying structure.

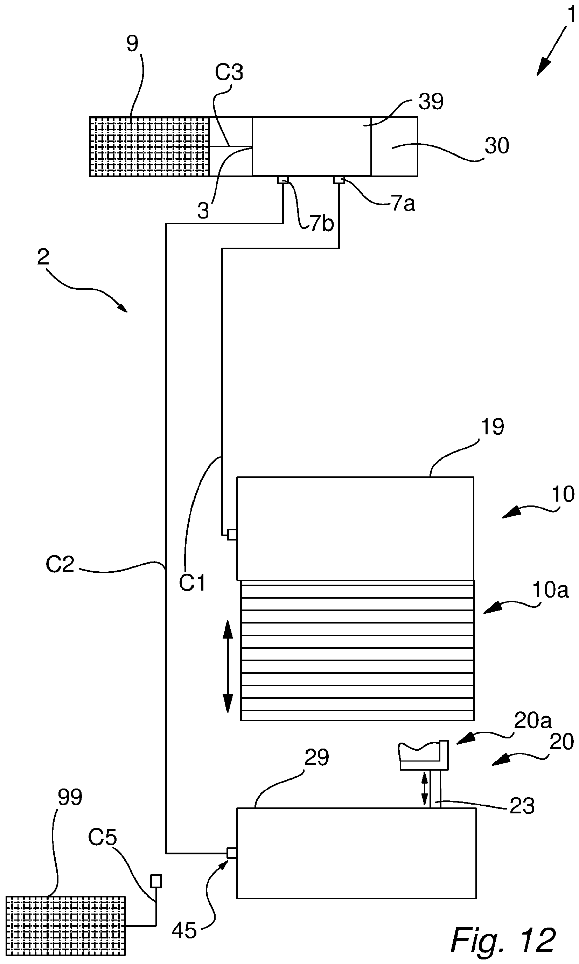

Fig. 12 illustrates schematically an embodiment of the present disclosure where a retro-fitting solution has been provided to obtain a system 1 according to embodiments of the present disclosure.

Here, the first connection 7a and/or the second connection 7b are output connections of the switching arrangement, such as a plug and socket connection. They may be part of the same plug/socket connection (not illustrated in fig. 12), or they may be separate plug/socket connections as illustrated.

Initially, the first building aperture cover 10 is provided, together with the first electrically driven drive unit and the first rechargeable battery unit which may be placed in a common enclosure 19.

Additionally, a photovoltaic power supply panel 9 and the switching arrangement 2 is provided, where the switching arrangement is placed in another enclosure 39.

The first building aperture cover 10 is then connected to or mounted on the second building aperture cover 20. This is however not illustrated in fig. 12 in order to improve the understanding of the figure, see e.g. instead fig. 1. This installation may be provided according to an installation manual received together with the first building aperture cover 10, or found on the internet.

The photovoltaic power supply panel 9 is connected to the switching arrangement 2 at the input 3, e.g. by means of e.g. a plug and socket connection (not illustrated in fig. 12). The switching arrangement enclosure 39 may then be placed in a mounting arrangement 30 of one of the aperture covers 10, 20, such as the first aperture cover 10, as previously explained e.g. in relation to e.g. fig. 1, preferably together with the panel 9 and an optional rain sensor (not illustrated in fig. 12).

In some embodiments of the present disclosure, the panel 9 and/or switching arrangement 2 enclosure 39 may be pre-mounted in the mounting arrangement 30 upon delivery of the building aperture cover 10, and the connection C3 there between may also be pre-established upon delivery of the building aperture cover 10.

Before or after installing the first building aperture cover 10, onto the second building aperture cover 20, an existing recharge wire connection C5 configured to recharge the second rechargeable battery unit in the enclosure 29 by means of energy received from a photovoltaic panel 99 is dismantled. The photovoltaic panel 99 may be configured to provide a higher charging voltage than the panel 9, and in that case, a converter arrangement 4 may be present in e.g. the switching arrangement as previously described. The panel 99 may hence be scrapped or reused for another purpose. In some situations however, the panel 99 may be reused instead of supplying a new panel 9, e.g. dependent on the type of existing panel 99.

A recharge wire connection C2 is then instead established between the second rechargeable battery unit in enclosure 29 and an output connection 7b of the switching arrangement 2 to supply electric energy from the photovoltaic power supply panel 9 (or panel 99 if it is reused).

The establishing of the second recharge wire connection may hence comprise reusing an input connection, such as a plug or socket connection, that was used for connecting the dismantled, existing recharge wire connection C5 to recharge the second rechargeable battery unit 22.

The retrofitting method may furthermore comprise the step of establishing a recharge wire connection C1 between an output 7a of the switching arrangement 2 and the first rechargeable battery unit 12 so as to enable supply of electric energy from the photovoltaic power supply panel 9 to recharge the first rechargeable battery unit, if this has e.g. not been pre-established upon delivery of the cover 10.

### Items

The present disclosure is further described in the following items.
1. A building aperture cover system (1), wherein the building aperture cover system (1) comprises:
   a first building aperture cover (10) and a first electrically driven drive unit (11) configured to adjust a covering part (10a) of the first building aperture cover (10),
   a first rechargeable battery unit (12) configured to store electric power and supply electric power to the first electrically driven drive unit (11),
   a photovoltaic power supply panel (9),
   a switching arrangement (2) connected to the photovoltaic power supply panel (9) at an input connection (3) so as to receive electric energy from the photovoltaic power supply panel (9), wherein the switching arrangement (2) comprises
      - a switching circuitry (5) configured to switch between a first switch state (S1) and a second switch state (S2), and
      - a switching controller (6) configured to control the switching circuitry (5),
   wherein the switching arrangement (2) is configured to supply electric energy from the photovoltaic power supply panel (9) at a first connection (7a) to recharge the first rechargeable battery unit (12) when the switching circuitry (5) is in the first switch state (S1),
   wherein the building aperture cover system (1) may moreover comprise
      - a second building aperture cover (20),
      - a second electrically driven drive unit (21) configured to adjust a covering part (20a) of the second building aperture cover, and
      - a second rechargeable battery unit (22) configured to store electric power and supply electric power to the second electrically driven drive unit (21),
   wherein the second rechargeable battery unit (22) is configured to receive electric energy from the switching arrangement (2) from a second connection (7b) to recharge the second rechargeable battery unit (22) when the switching arrangement (2) is in the second switch state (S2),
   wherein the switching controller (6) is configured to switch between the first switch state (S1) and the second switch state (S2) based on at least one predefined criteria.
2. A building aperture cover system (1) according to item 1, wherein said switching controller (6) is configured to toggle the switching circuitry (5) between the first switch mode (S1) and second switch mode (S2) based on the at least one predefined criteria.
3. A building aperture cover system (1) according to any of the preceding items,
   wherein said switching controller (6) is configured to provide an open loop control of the switching circuitry (5).
4. A building aperture cover system (1) according to any of the preceding items,
   wherein said predefined criteria comprises an output from a timer arrangement such as a countdown timer.
5. A building aperture cover system (1) according to item 4, wherein said output from the timer arrangement is configured to be provided at the expiry (TE) of a predefined time period (CTP1, CTP2).
6. A building aperture cover system (1) according to any of the preceding items,
   wherein a charging time period (CTP1, CTP2) before switching (TE) from one of said switch states (S1, S2) to the other of said switch states (S1, S2) is configured to be more than 1 second, such as more than 1 minute, such as more than 4 minutes or more than 10 minutes.
7. A building aperture cover system (1) according to any of the preceding items,
   wherein the second rechargeable battery unit (22) is configured to receive electric energy from a first converter arrangement (4) comprising a Switched Mode Power Supply converter,
   wherein the first converter arrangement (4) is configured to convert electric energy from the photovoltaic power supply panel (9) so as to provide a second supply voltage level (V2) when the switching circuitry (5) is in the second switch state (S2), wherein the second supply voltage level (V2) is different from a first supply voltage level (V1) provided at the first connection (7a) when the switching circuitry (5) is in the first switch state (S1).
8. A building aperture cover system (1) according to item 7, wherein the switching arrangement (2) comprises said first converter arrangement (4).
9. A building aperture cover system (1) according to item 7 or 8, wherein a charging controller (8) comprises a Maximum Power Point Tracking (MPPT) feature, wherein the a Maximum Power Point Tracking (MPPT) feature is configured to retrieve one or more output parameters (Vin, Iin) provided by means of the input connection (3), and adapt the pulse width modulation of the Switched Mode Power Supply converter (4) of the first converter arrangement based thereon.
10. A building aperture cover system (1) according to any of the preceding items,
   wherein the switching arrangement (2) in the first switch state (S1) is configured to transfer electric energy from the input connection (3) to the first connection (7a) with a substantially unchanged voltage level (V1) compared to the voltage level (V3) at the input connection (3).
11. A building aperture cover system (1) according to any of the preceding items,
   wherein a converter arrangement (13) comprising a Switched Mode Power Supply converter is configured to charge the first rechargeable battery unit (12) with energy received from the first connection (7a) of the switching arrangement (2).
12. A building aperture cover system (1) according to item 11, wherein a charging controller (14) comprises a first Maximum Power Point Tracking (MPPT) feature configured to retrieve one or more output parameters (Vin, Iin) provided by means of the first output connection (7a) and adapt the pulse width modulation of the converter arrangement (13) based thereon.
13. A building aperture cover system (1) according to any of the preceding items,
   wherein an enclosure (19) encloses the first rechargeable battery unit (12) and the first electrically driven drive unit (11), and wherein said enclosure (19) is separate to a further enclosure (29) which encloses at least the second electrically driven drive unit (21) and the second rechargeable battery unit (22).
14. A building aperture cover system (1) according to item 13, wherein the enclosure (19) enclosing the first rechargeable battery unit (12) and the first electrically driven drive unit (11) furthermore encloses a converter arrangement comprising a switch mode power supply (13) configured to charge the first rechargeable battery unit (12) with energy received from the first connection (7a).
15. A building aperture cover system (1) according to item 13 or 14, wherein one or more insulated charging wires (C1, C2) extends between said enclosures (19, 29) and the switching arrangement (2), such as wherein said one or more insulated charging wires (C1, C2) comprises a first charging wire (C1) for charging the first rechargeable battery unit (12), and a second charging wire (C2) for charging the second rechargeable battery unit (22).
16. A building aperture cover system (1) according to any of the preceding items,
   wherein said switching arrangement (2) is arranged in a first enclosure (39), wherein the first enclosure (39) is separate to a second enclosure (19), wherein the second enclosure encloses the first rechargeable battery unit (12) and the first electrically driven drive unit (11),
   and/or
   wherein the first enclosure (39) is separate to a third enclosure (29), wherein the third enclosure encloses the second electrically driven drive unit (21) and the second rechargeable battery unit.
17. A building aperture cover system (1) according to any of the preceding items,
   wherein said switching arrangement (2) is arranged in a first enclosure (39), wherein said first enclosure (39) is separate to an enclosure (29) which encloses the second electrically driven drive unit (21) and the second rechargeable battery unit (22).
18. A building aperture cover system (1) according to item 17, wherein a charging wire (C2) connects second connection (7b) in the first enclosure (39) with the second rechargeable battery unit (22), such as by means of one or more plug and socket connections (42, 45), so as to provide a re-charging of the second rechargeable battery unit (22).
19. A building aperture cover system (1) according to any of the preceding items,
   wherein the first building aperture cover (10) is a window covering, such as a shutter, e.g. a roller shutter, or a blind such as a roller blind or venetian blind.
20. A building aperture cover system (1) according to any of the preceding items,
   wherein the second building aperture cover (20) is a window, such as a roof window, and wherein the covering part (20a) of the second building aperture cover (20) comprises an insulated glass pane (25) arranged in a sash (26) which is connected to a fixation frame (27) by means of a hinge connection (28).
21. A building aperture cover system (1) according to any of the preceding items,
   wherein an enclosure (29) enclosing the second electrically driven drive unit (21) and the second rechargeable battery unit (22) is attached to or embedded in the second building aperture cover (20).
22. A building aperture cover system (1) according to any of items 16-21, wherein said first enclosure (39) is configured to be mounted in a mounting arrangement (30), such as a mounting trail arrangement, of the first (10) and/or second (20) building aperture cover.
23. A building aperture cover system (1) according to item 22, wherein said mounting arrangement (30) is arranged at an exterior, outwardly facing surface of the building aperture cover (10, 20), such as the first building aperture cover (10).
24. A building aperture cover system (1) according to item 22 or 23, wherein the photovoltaic power supply panel (9) and/or a rain sensor (31) is moreover mounted in said mounted arrangement (30).
25. A building aperture cover system (1) according to any of the preceding items,
   wherein an enclosure (19) enclosing the first rechargeable battery unit (12) and the first electrically driven drive unit (11), is attached to or embedded in the first building aperture cover (10).
26. A building aperture cover system (1) according to any of the preceding items
   wherein the first building aperture cover (10) is configured to be connected to or mounted on the second building aperture cover (20).
27. A building aperture cover system (1) according to item 26, wherein a part of the first building aperture cover (10) is configured to cover a mounting arrangement (40) such as a trail arrangement of the of the second building aperture cover (20) when correctly connected to or mounted on, such as retrofitted onto, the second building aperture cover (20).
28. A building aperture cover system (1) according to any of the preceding items,
   wherein said photovoltaic power supply panel (9) is a Crystalline, such as a mono crystalline, silicon photovoltaic power supply panel, and/or wherein said photovoltaic power supply panel (9) comprises between 3 and 15 solar cells, such as between 5 and 9 solar cells.
29. A building aperture cover system (1) according to any of the preceding items,
   wherein the photovoltaic power supply panel (9) has a rated maximum output voltage that is below 10V DC, such as below 8V DC, for example below 6V DC, such as around 4.2V DC.
30. A building aperture cover system (1) according to any of the preceding items,
   wherein a first system controller (53) is configured to operate the first electrically driven drive unit (11) according to one or more predefined rules based on input from one or more input units, wherein said input comprises one or more of the following:
   - one or more timers and/or clock functionalities
   - control signals received by mans of a receiver or transceiver (52),
   - one or more sensors such as a rain sensor, a temperature sensor and/or a light sensor.
31. A building aperture cover system (1) according to item 30, wherein the first rechargeable battery unit (12) is configured to power the first system controller (53) and/or one or more of said input units.
32. A building aperture cover system (1) according to any of the preceding items,
   wherein a second system controller (63) is configured to operate the second electrically driven drive unit (21) according to one or more predefined rules based on input from one or more input units, wherein said input comprises one or more of the following:
   - one or more timers and/or clock functionalities,
   - control signals received by mans of a receiver or transceiver (62),
   - one or more sensors such as a rain sensor, a temperature sensor or a light sensor.
33. A building aperture cover system (1) according to item 32, wherein the second rechargeable battery unit (22) is configured to power the second system controller (63) and/or one or more of said input units.
34. A building aperture cover system (1) according to any of items 30-33, wherein the first system controller (53) and the second system controller (63) are arranged in each their enclosure (19, 29).
35. A building aperture cover system (1) according to any of the preceding items,
   wherein said first connection (7a) and/or second connection (7b) are output connections of the switching arrangement, such as a plug and socket connection.
36. A method of installing a power supply system (1) according to any of the preceding items, wherein said method comprises:
   - providing the first building aperture cover (10), the first electrically driven drive unit (11), the first rechargeable battery unit (12), a first photovoltaic power supply panel (9) and the switching arrangement (2),
   - dismantling an existing recharge wire connection configured to recharge the second rechargeable battery unit (22) by means of energy received from a photovoltaic panel (99),
   - establishing a recharge wire connection (C2) between the second rechargeable battery unit (22) and an output connection (7b) of the switching arrangement (2) so as to enable supply of electric energy from the first photovoltaic power supply panel (9) to the rechargeable battery unit (22) through the switching arrangement (2).
37. A method according to item 36, wherein the method furthermore comprises the step of establishing a recharge wire connection (C1) between an output (7a) of the switching arrangement (2) and the first rechargeable battery unit (12) so as to enable supply of electric energy from the photovoltaic power supply panel (9) to recharge the first rechargeable battery unit (12),
38. A method according to item 36 or 37, wherein said step of establishing the recharge wire connection (C2) to enable supply of electric energy from the photovoltaic power supply panel (9) to the rechargeable battery unit (22) through the switching arrangement (2) comprises reusing an input connection, such as a plug or socket connection, that was used for connecting said dismantled, existing recharge wire connection (5) to recharge the second rechargeable battery unit (22).
39. A building aperture cover system (1) according to any of items 36-38, wherein the switching arrangement (2) is placed in a first enclosure (39), and wherein the method comprises the step of mounting said first enclosure (39) in a mounting arrangement (30), such as a mounting trail arrangement, of the first (10) and/or second (20) building aperture cover.
40. A method according to any of items 36-39, wherein said switching arrangement (2) is arranged in a first enclosure (39), wherein the first enclosure (39) is separate to a second enclosure (19) which encloses the first rechargeable battery unit (12) and the first electrically driven drive unit (11), and wherein the first enclosure (39) and the second enclosure (19) are separate to a third enclosure (29) which encloses the second electrically driven drive unit (21) and the second rechargeable battery unit (22).
41. A method according to item 40, wherein the recharge wire connection (C2) between the second rechargeable battery unit (22) and an output connection (7b) of the switching arrangement (2) extends between the first enclosure (39) and the second enclosure (19), and wherein a second recharge cable connection (C2) extends between the first enclosure (39) and the third enclosure (29).
42. A method according to any of items 36-41, wherein the method comprises the step of retrofitting the first building aperture (10) cover onto the second building aperture cover (20).
43. A method according to item 42, wherein a part of the first building aperture cover (10) covers a mounting arrangement (40) such as a trail arrangement for a photovoltaic panel of the of the second building aperture cover (20) after said retrofitting.

It is generally understood that while the present disclosure has been described in detail in connection with only a limited number of embodiments or aspects, it should be readily understood that the present disclosure is not limited to such disclosed embodiments or aspects. Rather, the present disclosure can be modified to incorporate any number of variations, alterations, substitutions or equivalent arrangements not heretofore described, but which are commensurate in scope with the present disclosure. Additionally, while various embodiments or aspects of the present disclosure have been described, it is to be understood that aspects of the present disclosure may include only some of the described embodiments or aspects or combinations of the various embodiments or aspects. Accordingly, the present disclosure is not to be seen as limited by the foregoing description.

## Claims

1. A building aperture cover system (1), wherein the building aperture cover system (1) comprises:
a first building aperture cover (10) and a first electrically driven drive unit (11) configured to adjust a covering part (10a) of the first building aperture cover (10),
a first rechargeable battery unit (12) configured to store electric power and supply electric power to the first electrically driven drive unit (11),
a photovoltaic power supply panel (9),
a switching arrangement (2) connected to the photovoltaic power supply panel (9) at an input connection (3) so as to receive electric energy from the photovoltaic power supply panel (9), wherein the switching arrangement (2) comprises
- a switching circuitry (5) configured to switch between a first switch state (S1) and a second switch state (S2), and
- a switching controller (6) configured to control the switching circuitry (5),
wherein the switching arrangement (2) is configured to supply electric energy from the photovoltaic power supply panel (9) at a first connection (7a) to recharge the first rechargeable battery unit (12) when the switching circuitry (5) is in the first switch state (S1),
wherein the building aperture cover system (1) moreover comprises
- a second building aperture cover (20),
- a second electrically driven drive unit (21) configured to adjust a covering part (20a) of the second building aperture cover, and
- a second rechargeable battery unit (22) configured to store electric power and supply electric power to the second electrically driven drive unit (21),
wherein the second rechargeable battery unit (22) is configured to receive electric energy from the switching arrangement (2) from a second connection (7b) to recharge the second rechargeable battery unit (22) when the switching arrangement (2) is in the second switch state (S2),
wherein the switching controller (6) is configured to switch between the first switch state (S1) and the second switch state (S2) based on at least one predefined criteria.

2. A building aperture cover system (1) according to claim 1, wherein said switching controller (6) is configured to provide an open loop control of the switching circuitry (5).

3. A building aperture cover system (1) according to any of the preceding claims,
wherein said predefined criteria comprises an output from a timer arrangement such as a countdown timer.

4. A building aperture cover system (1) according to claim 3, wherein said output from the timer arrangement is configured to be provided at the expiry (TE) of a predefined charging time period (CTP1, CTP2),
such as wherein a charging time period (CTP1, CTP2) before switching (TE) from one of said switch states (S1, S2) to the other of said switch states (S1, S2) is configured to be more than 1 second, such as more than 1 minute, such as more than 4 minutes or more than 10 minutes.

5. A building aperture cover system (1) according to any of the preceding claims,
wherein the second rechargeable battery unit (22) is configured to receive electric energy from a first converter arrangement (4) comprising a Switched Mode Power Supply converter,
wherein the first converter arrangement (4) is configured to convert electric energy from the photovoltaic power supply panel (9) so as to provide a second supply voltage level (V2) when the switching circuitry (5) is in the second switch state (S2),
wherein the second supply voltage level (V2) is different from a first supply voltage level (V1) provided at the first connection (7a) when the switching circuitry (5) is in the first switch state (S1).

6. A building aperture cover system (1) according to claim 5, wherein the switching arrangement (2) comprises said first converter arrangement (4).

7. A building aperture cover system (1) according to claim 5 or 6, wherein a charging controller (8) comprises a Maximum Power Point Tracking (MPPT) feature, wherein the a Maximum Power Point Tracking (MPPT) feature is configured to retrieve one or more output parameters (Vin, Iin) provided by means of the input connection (3), and adapt the pulse width modulation of the Switched Mode Power Supply converter (4) of the first converter arrangement based thereon.

8. A building aperture cover system (1) according to any of the preceding claims,
wherein the switching arrangement (2) in the first switch state (S1) is configured to transfer electric energy from the input connection (3) to the first connection (7a) with a substantially unchanged voltage level (VI) compared to the voltage level (V3) at the input connection (3).

9. A building aperture cover system (1) according to any of the preceding claims,
wherein a converter arrangement (13) comprising a Switched Mode Power Supply converter is configured to charge the first rechargeable battery unit (12) with energy received from the first connection (7a) of the switching arrangement (2).

10. A building aperture cover system (1) according to claim 9, wherein a charging controller (14) comprises a first Maximum Power Point Tracking (MPPT) feature configured to retrieve one or more output parameters (Vin, Iin) provided by means of the first output connection (7a) and adapt the pulse width modulation of the converter arrangement (13) based thereon.

11. A building aperture cover system (1) according to any of the preceding claims,
wherein an enclosure (19) encloses the first rechargeable battery unit (12) and the first electrically driven drive unit (11), and wherein said enclosure (19) is separate to a further enclosure (29) which encloses at least the second electrically driven drive unit (21) and the second rechargeable battery unit (22).

12. A building aperture cover system (1) according to claim 11, wherein the enclosure (19) enclosing the first rechargeable battery unit (12) and the first electrically driven drive unit (11) furthermore encloses a converter arrangement comprising a switch mode power supply (13) configured to charge the first rechargeable battery unit (12) with energy received from the first connection (7a).

13. A building aperture cover system (1) according to any of the preceding claims,
wherein said switching arrangement (2) is arranged in a first enclosure (39),
wherein the first enclosure (39) is separate to a second enclosure (19), wherein the second enclosure encloses the first rechargeable battery unit (12) and the first electrically driven drive unit (11),
and/or
wherein the first enclosure (39) is separate to a third enclosure (29), wherein the third enclosure encloses the second electrically driven drive unit (21) and the second rechargeable battery unit.

14. A building aperture cover system (1) according to claim 13, wherein said first enclosure (39) is configured to be mounted in a mounting arrangement (30), such as a mounting trail arrangement, of the first (10) and/or second (20) building aperture cover.

15. A building aperture cover system (1) according to any of the preceding claims,
wherein the first building aperture cover (10) is a window covering, such as a shutter, e.g. a roller shutter, or a blind such as a roller blind or venetian blind,
and/or
wherein the second building aperture cover (20) is a window, such as a roof window, and wherein the covering part (20a) of the second building aperture cover (20) comprises an insulated glass pane (25) arranged in a sash (26) which is connected to a fixation frame (27) by means of a hinge connection (28).

16. A building aperture cover system (1) according to any of the preceding claims,
wherein a first system controller (53) is configured to operate the first electrically driven drive unit (11) according to one or more predefined rules based on input from one or more input units, wherein said input comprises one or more of the following:
- one or more timers and/or clock functionalities
- control signals received by mans of a receiver or transceiver (52),
- one or more sensors such as a rain sensor, a temperature sensor and/or a light sensor,
and/or
wherein a second system controller (63) is configured to operate the second electrically driven drive unit (21) according to one or more predefined rules based on input from one or more input units, wherein said input comprises one or more of the following:
- one or more timers and/or clock functionalities,
- control signals received by mans of a receiver or transceiver (62),
- one or more sensors such as a rain sensor, a temperature sensor or a light sensor.

17. A method of installing a power supply system (1) according to any of the preceding claims, wherein said method comprises:
- providing the first building aperture cover (10), the first electrically driven drive unit (11), the first rechargeable battery unit (12), a first photovoltaic power supply panel (9) and the switching arrangement (2),
- dismantling an existing recharge wire connection configured to recharge the second rechargeable battery unit (22) by means of energy received from a photovoltaic panel (99),
- establishing a recharge wire connection (C2) between the second rechargeable battery unit (22) and an output connection (7b) of the switching arrangement (2) so as to enable supply of electric energy from the first photovoltaic power supply panel (9) to the rechargeable battery unit (22) through the switching arrangement (2),
- such as wherein said method further comprises the step of retrofitting the first building aperture (10) cover onto the second building aperture cover (20).
